# EUROPEAN PATENT SPECIFICATION

(11) **EP 3 576 207 B1**
(45) Date of publication and mention of the grant of the patent: **27.12.2023**
(21) Application number: 19177179.9
(22) Date of filing: 29.05.2019
(51) Int. Cl.: H01M 10/0525, H01M 10/0567

(54) **ELECTROLYTE AND LITHIUM-ION BATTERY**
ELEKTROLYT UND LITHIUM-IONEN-BATTERIE
ÉLECTROLYTE ET BATTERIE LITHIUM-ION

(30) Priority: 01.06.2018 CN 201810558376
(43) Date of publication of application: 04.12.2019
(73) Proprietor: Contemporary Amperex Technology Co., Limited, Jiaocheng District Ningde City, Fujian 352100 (CN)
(72) Inventor: ZHANG, Cuiping, Ningde City, Fujian 352100 (CN); HAN, Changlong, Ningde City, Fujian 352100 (CN); ZHANG, Ming, Ningde City, Fujian 352100 (CN); ZHANG, Hao, Ningde City, Fujian 352100 (CN); ZOU, Hailing, Ningde City, Fujian 352100 (CN)
(74) Representative: Gong, Jinping

(56) References cited:
- CN-A- 106 558 732
- CN-A- 107 887 648
- US-A1- 2009 226 821

## Description

### TECHNICAL FIELD

The present disclosure relates to the field of batteries, and in particular, to an electrolyte and a lithium-ion battery.

### BACKGROUND

In recent years, with increasing attention to environmental issues, research on new energy sources that can be used in electric vehicles (EV, such as gasoline vehicles, diesel vehicles, etc.) and hybrid electric vehicles (HEVs) in place of fossil fuels is actively being carried out. Among them, lithium-ion batteries have attracted great attention due to their high specific energy, long cycle life, low self-discharge and good safety performance. At present, applications of lithium-ion batteries have been deeply into every aspect of daily life.

With the continuous development of lithium-ion batteries applications, lithium-ion batteries with high energy density are gradually favored by customers. In order to meet this requirement, the selection of electrode materials requires that the positive electrode active material has a high content of element nickel. However, an increase in the content of element nickel causes a decrease in the content of element manganese, and the structural stability of the positive electrode active material having a high nickel content is relatively weak compared with that of the positive electrode active material having a low nickel content. Moreover, the high temperature performance (such as, storage performance and cycle performance) of lithium-ion batteries with a positive electrode active material having a high nickel content are also generally poor.

Therefore, there is an urgent need to develop an electrolyte which is expected to form a good interface film at the interfaces of the positive and negative electrodes, and suppress the expansion of the cell during high-temperature storage, besides it is desirable that the impedance of the interface film is low, so that lithium ions can be quickly conducted in the electrolyte itself.

CN107887648A discloses a non-flatulent lithium titanate battery, which includes a positive electrode sheet, a negative electrode sheet, a separator, and an electrolyte. The electrolyte includes a lithium salt, an organic solvent, and an additive. The additive may be ethyl propionate, ethylene carbonate, and diethyl carbonate with a mass ratio of 1:(1.5-2.5):(0.5-1.5). However, CN107887648A does not provide any experimental data to support and describe that the additive may suppress the flatulence of the battery with lithium titanate as negative electrode at high temperatures, and improve the battery's cycle life and various perfoumances.

### SUMMARY

In embodiments of the present disclosure, it is provided an electrolyte and a lithium-ion battery, where the electrolyte can effectively reduce the DCR growth during use of a lithium-ion battery.

In an embodiment of a first aspect of the present disclosure, the present disclosure provides an electrolyte including an electrolyte salt, an organic solvent, and additives. The additives include a first additive that is one or more selected from compounds shown as Formula 1, and a second additive that is one or more selected from compounds shown as Formula 2. In Formula 1, n is an integer from 1 to 4, R₁ is one selected from H, C1-C5 alkyl, C1-C5 fluoroalkyl, C2-C5 alkenyl, C2-C5 alkynyl, and phenyl. In Formula 2, R₂₁, and R₂₂ are each independently one selected from F, trifluoromethyl, pentafluoroethyl, and cyano, and R₂₁ and R₂₂ are not both F.

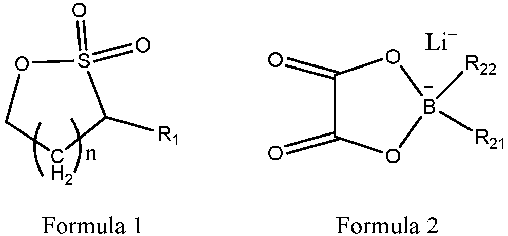

In an embodiment of a second aspect of the present disclosure, the present disclosure provides a lithium-ion battery including the electrolyte according to the first aspect of the present disclosure.

Compared with the existing technologies, the present disclosure has the following advantages:

The electrolyte of the present disclosure includes both cyclic sulphonate additive shown as Formula 1 and lithium (oxalato)borate additive shown as Formula 2, the synergize action of the two additives can form a uniform, chemically stable and low-impedance interface film on the surfaces of the positive and negative electrodes of a lithium-ion battery, which can effectively reduce the DCR growth during the use of the lithium-ion battery.

### DETAILED DESCRIPTION

The electrolyte and lithium-ion battery according to the present disclosure will be described in detail hereinafter.

The electrolyte according to the first aspect of the present disclosure will be described first.

According to an embodiment of the first aspect of the present disclosure, the electrolyte includes an electrolyte salt, an organic solvent and additives. The additives include a first additive and a second additive. The first additive is one or more selected from compounds shown as Formula 1, and the second additive is one or more selected from compounds shown as Formula 2. In Formula 1, n is an integer from 1 to 4, R₁ is one selected from H, C1-C5 alkyl, C1-C5 fluoroalkyl, C2-C5 alkenyl, C2-C5 alkynyl, and phenyl. In Formula 2, R₂₁ and R₂₂ are each independently one selected from F, trifluoromethyl, pentafluoroethyl, and cyano, and R₂₁ and R₂₂ are not both F.

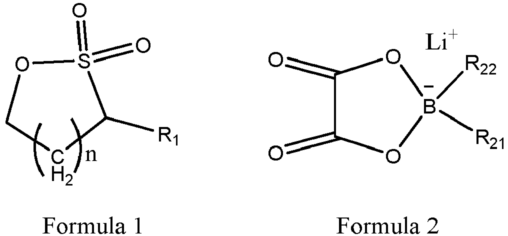

In an embodiment of the present disclosure, n is 1, 2, 3 or 4.

In an embodiment of the present disclosure, R₁ is H.

In an embodiment of the present disclosure, R₁ is C1-C5 alkyl, the C1-C5 alkyl is selected from the group consisting of -CH₃, -CH₂CH₃, -CH₂CH₂CH₃, -CH(CH3)₂, -CH₂CH₂CH₂CH₃, -CH(CH₃)CH₂CH₃, -CH₂CH(CH₃)₂, -C(CH₃)₃, -CH₂CH₂CH₂CH₂CH₃, -CH(CH₃)CH₂CH₂CH₃, -CH₂CH(CH₃)CH₂CH₃, -CH₂CH₂CH(CH₃)₂, -CH(C₂H₅)CH₂CH₃, -C(CH₃)₂CH₂CH₃, -CH(CH₃)CH(CH₃)₂, -CH₂C(CH₃)₃. In a specific embodiment of the present disclosure, R₁ is -CH₃ or -CH₂CH₃.

In an embodiment of the present disclosure, R₁ is C1-C5 fluoroalkyl, the C1-C5 fluoroalkyl may be a C1-C5 alkyl having one fluorine atom, two fluorine atoms or three fluorine atoms, and the C1-C5 alkyl is as described above. In a specific embodiment of the present disclosure, R₁ is selected from the group consisting of -CF₃, CHF₂, CHF₂, -CH₂CF₃, -CF₂CF₃, -CH₂CH₂CF₃, -CH(CF3)₂. In another specific embodiment of the present disclosure, R₁ is -CF₃ or -CF₂CF₃.

In an embodiment of the present disclosure, R₁ is C2-C5 alkenyl, the C2-C5 alkenyl is selected from the group consisting of -CH=CH₂, -CH=CHCH₃, CH₂=CHCH₂-, -CH₂CH=CHCH₃, -CH=CHCH₂CH₂CH₃, CH₂=CHCH₂CH₂CH₂-, -CH₂CH=CHCH₂CH₃, CH₃CH=CHCH₂CH₂-. In a specific embodiment of the present disclosure, R₁ is CH₂=CHCH₂-.

In an embodiment of the present disclosure, R₁ is C2-C5 alkynyl, the C2-C5 alkynyl is selected from the group consisting of -C=CH, -C=CCH₃, CH=CCH₂-, -CH₂C=CCH₃, -C=CCH₂CH₂CH₃, CH=CCH₂CH₂CH₂-, -CH₂C=CCH₂CH₃, CH₃C=CCH₂CH₂-. In a specific embodiment of the present disclosure, R₁ is -C=CH or -C=CCH₃.

In an embodiment of the present disclosure, R₁ is phenyl.

In the electrolyte according to the first aspect of the present disclosure:

the first additive is a cyclic sulphonate additive which can involve in film formation at the interfaces of the positive and negative electrodes, where the interface film formed on the positive electrode can effectively inhibit the oxidative decomposition of the electrolyte on the surface of the positive electrode. In this way, on the one hand, it can prevent a product from oxidative decomposition of the electrolyte from being deposited on the interface of the positive electrode to increase the interface impedance of the positive electrode; and on the other hand, it can prevent a poor electrical contact at the interface caused by gas production from oxidative decomposition of the electrolyte on the positive electrode interface. However, interface film (commonly referred to as SEI film) formed by the reduction of the cyclic sulphonate additive at the interface of the negative electrode has a high impedance, affecting transport of lithium ions, thereby deteriorating the power performance of the lithium-ion battery.

The second additive is a lithium (oxalato)borate additive that can undergo a complicated exchange reaction with a main component in the SEI film formed at the interface of the negative electrode, which helps form a more stable SEI film at the interface of the negative electrode and significantly reduces the impedance at interface of the negative electrode, so that the lithium-ion battery has a good power performance. However, the lithium (oxalato)borate additive has poor oxidation resistance and is prone to oxidative decomposition at high temperatures, which deteriorates the high temperature performance of the lithium-ion battery to some extent.

When the first additive and the second additive are used in combination, the first additive can form a film at the interfaces of the positive and negative electrodes, prevent the oxidative decomposition of the electrolyte, effectively suppress the gas production inside the lithium-ion battery, and further prevent the second additive from oxidative decomposition at a high temperature. The second additive can be preferentially reduced to form a film on the negative electrode, which can improve the defect of high impedance of the film formed by the first additive at the negative electrode interface, effectively reduce the DCR growth during the use of the lithium-ion battery and improve the power performance of the lithium-ion battery. Therefore, under the synergistic action of the two additives, the lithium-ion battery can have good high-temperature storage performance and power performance at the same time.

In the electrolyte according to an embodiment of the first aspect of the present disclosure, the first additive may be one or more selected from the following compounds:

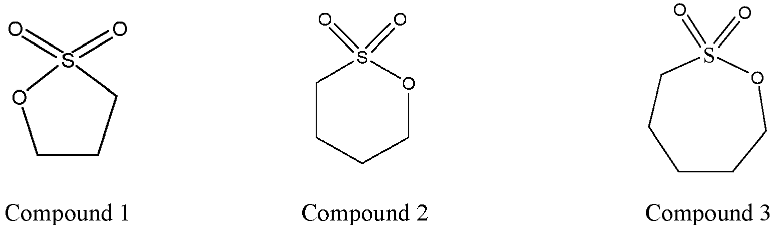

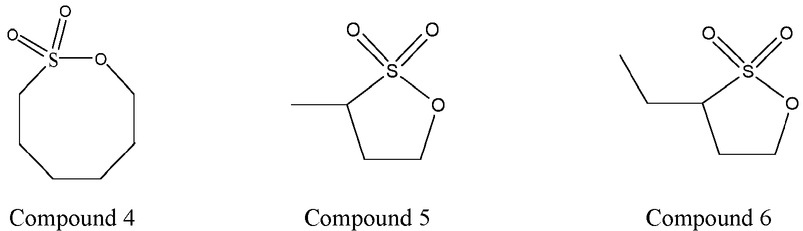

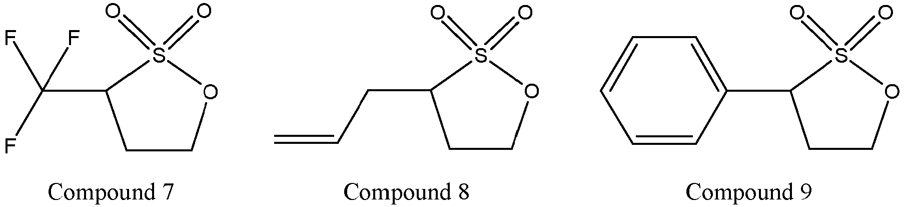

In the electrolyte according to an embodiment of the first aspect of the present disclosure, the second additive may be one or more selected from the following compounds:

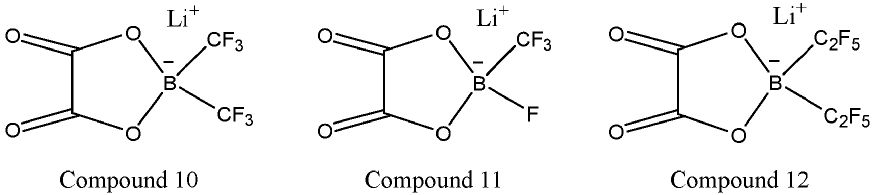

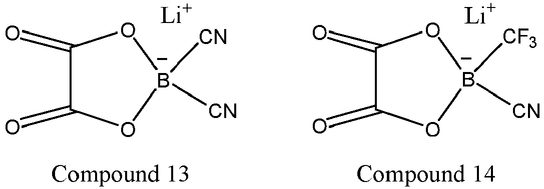

In the electrolyte according to the first aspect of the present disclosure, if the content of the first additive is too small, it difficult to form a complete interface film at the positive electrode interface of the lithium-ion battery, and if the content of the first additive is excessive, the impedance at the negative electrode interface is significantly increased and the power performance of the lithium-ion battery is deteriorated. In an example, the first additive has a content of 3% or less of total mass of the electrolyte; and in another example, the first additive has a content of 0.01% to 3% of total mass of the electrolyte. For example, the first additive may have a content of 0.01%, 0.02%, 0.03%, 0.5%, 1%, 2% or 3% of total mass of the electrolyte, including any values therein and all ranges and subranges (such as 0.01% to 1%, 0.5% to 3%, or 0.5% to 1%, etc., but not limited to these).

In the electrolyte according to the first aspect of the present disclosure, if the content of the second additive is too small, the effect of lowering the impedance at the negative electrode interface cannot be achieved, and the power performance of the lithium-ion battery cannot be effectively improved; and if the content of the second additive is excessive, its oxidative decomposition at high temperatures is difficult to be effectively suppressed, which deteriorates the high temperature performance of the lithium-ion battery. In an example, the second additive has a content of 1% or less of total mass of the electrolyte; and in another example, the second additive has a content of 0.01% to 1% of total mass of the electrolyte. For example, the second additive may have a content of 0.01%, 0.02%, 0.03%, 0.05%, 0.1%, 0.5% or 1%, including any values therein and all ranges and subranges (such as 0.01% to 1%, 0.5% to 3%, or 0.5% to 1%, etc., but not limited to these).

In the electrolyte according to the first aspect of the present disclosure, the concentration of the electrolyte salt is not particularly limited and may be selected according to actual needs. In an example, the electrolyte salt has a concentration of 0.5 mol/L to 2 mol/L, and in another example, the electrolyte salt has a concentration of 0.8 mol/L to 1.2 mol/L.

In the electrolyte according to the present invention, the electrolyte salt is one or more selected from the group consisting of lithium hexafluorophosphate, lithium bis(fluorosulfonyl)imide, lithium bis(trifluoromethanesulphonyl)imide, lithium trifluoromethanesulfonate, lithium hexafluoroarsenate, lithium bis(oxalato)borate, and lithium perchlorate, and preferably lithium hexafluorophosphate.

In the electrolyte according to the first aspect of the present disclosure, the type of the organic solvent is not particularly limited and may be selected according to actual needs. In an example, a non-aqueous organic solvent is used, and in another example, a non-aqueous organic solvent that has good thermal stability and electrochemical stability at a high temperature and a high voltage, and can provide a stable electrochemical environment for a lithium-ion battery having a high voltage of 4.2 V or higher is used. Specifically, the non-aqueous organic solvent may include one or more of dimethyl carbonate, diethyl carbonate, dipropyl carbonate, ethyl methyl carbonate, methyl propyl carbonate, ethyl propyl carbonate, ethylene carbonate, propylene carbonate, butylene carbonate, γ-butyrolactone, methyl formate, ethyl acetate, propyl acetate, methyl propionate, ethyl propionate, propyl propionate and tetrahydrofuran.

In the electrolyte according to the first aspect of the present disclosure, the organic solvent may have a content of 65% to 85% of total mass of the electrolyte.

In the electrolyte according to the first aspect of the present disclosure, the additives may further include LiBF₄, which can reduce the internal resistance of a lithium-ion battery during use by lowering the resistance of charge transfer (Rct). In an example, LiBF₄ has a content of 1% or less of total mass of the electrolyte, and in another example, LiBF₄ has a content of 0.01% to 1% of total mass of the electrolyte.

In the electrolyte according to the first aspect of the present disclosure, the electrolyte may further include other types of additives, for example, the electrolyte may further include one or both of vinyl ethylene carbonate and ethylene sulfate.

In addition, the lithium-ion battery according to the second aspect of the present disclosure is described.

According to an embodiment of the second aspect of the present disclosure, the lithium-ion battery includes a positive electrode plate, a negative electrode plate, a separator, and the electrolyte according to the first aspect of the present disclosure.

In the lithium-ion battery according to the second aspect of the present disclosure, the positive electrode plate may include a positive electrode current collector and a positive electrode film provided on the positive electrode current collector and containing a positive electrode active material. The positive electrode active material has a general formula of LiₓNi_{y}Co_{z}MₖMeₚOᵣAₘ, where M is one or two selected from Mn and Al; Me is one or more selected from Zr, Zn, Cu, Cr, Mg, Fe, V, Ti, Y, and Nb; A is one or more selected from F, S, and Cl; 0.95≤x≤1.05, 0.5≤y<1, 0<z<0.5, 0<k<0.5, 0≤p≤0.1, y+z+k≤1, 1≤r≤2, 0≤m≤2, and m+r≥2. In an example, the positive electrode active material is one or more selected from LiNi_{0.8}Co_{0.1}Mn_{0.1}O₂, LiNi_{0.6}Co_{0.2}Mn_{0.2}O₂, LiNi_{0.8}Co_{0.15}Al_{0.05}O₂, and LiNi_{0.5}Co_{0.2}Mn_{0.3}O₂. The positive electrode film further includes a conductive agent and a binder, and the types of the conductive agent and the binder are not particularly limited, and may be selected according to actual needs.

In the lithium-ion battery according to the second aspect of the present disclosure, the negative electrode plate may include a negative electrode current collector and a negative electrode film provided on the negative electrode current collector and containing a negative electrode active material. The types of the negative electrode active material are not particularly limited, and may be selected according to actual needs. Specifically, the negative electrode active material is a material capable of reversibly de-intercalating lithium, including one or more of graphite, silicon, tin, a metal oxide, a silicon oxide, a tin oxide, a silicon alloy, a tin alloy, a silicon carbon composite, a tin carbon composite, and lithium titanate or the like. In an example, the negative electrode active material is selected from natural graphite, artificial graphite or a mixture of the two. The negative electrode film further includes a conductive agent and a binder, and the types of the conductive agent and the binder are not particularly limited, and may be selected according to actual needs. In addition, a metal lithium sheet may also be directly used as the negative electrode plate.

In the lithium-ion battery according to the second aspect of the present disclosure, the material of the separator is not limited, and may be selected according to actual needs.

The present disclosure is further illustrated below in conjunction with examples. It is to be understood that these examples are merely illustrative of the present disclosure and are not intended to limit the scope of the present disclosure.

The lithium-ion batteries of Examples 1-11 and Comparative Examples 1-7 are prepared as follows:

### (1) Preparation of positive electrode plate

The positive electrode active material LiNi_{0.8}Co_{0.1}Mn_{0.1}O₂, the conductive agent Super P, the binder polyvinylidene fluoride (PVDF) are mixed uniformly in N-methylpyrrolidone (NMP) to prepare a positive electrode slurry. The positive electrode slurry has a solid content of 50 wt%, and the mass ratio of LiNi_{0.8}Co_{0.1}Mn_{0.1}O₂, Super P, and PVDF in the solid content is 80:10:10. The positive electrode slurry is uniformly coated on a positive electrode current collector that is an aluminum foil, after drying at 85°C, cold pressing is performed, then trimming, slitting, cutting, and drying under vacuum at 85°C for 4 h, to obtain a positive electrode plate.

### (2) Preparation of negative electrode plate

The negative electrode active material artificial graphite, the conductive agent Super P, the thickener CMC, and the binder styrene-butadiene rubber (SBR) are mixed uniformly in deionized water to prepare a negative electrode slurry. The negative electrode slurry has a solid content of 30 wt%, and the mass ratio of artificial graphite, Super P, CMC, and SBR in the solid content is 80:15:3:2. The negative electrode slurry is uniformly coated on a positive electrode current collector that is a copper foil, after drying at 85°C, cold pressing is performed, then trimming, slitting, cutting, and drying under vacuum at 120°C for 12 h, to obtain a positive electrode plate.

### (3) Preparation of electrolyte

In an argon-filled glove box (where water content<10 ppm, and oxygen content<1 ppm), ethylene carbonate (EC) and diethyl carbonate (DEC) are thoroughly mixed at a mass ratio of 30:70 to obtain an organic solvent. Then, the additives are added to the above organic solvents at a certain mass ratio, and mixed uniformly. An appropriate amount of a lithium salt (LiPF₆) is slowly added. After the lithium salt is completely dissolved, an electrolyte having a lithium salt concentration of 1 mol/L is obtained. The specific types and contents of the additives are shown in Table 1, where the content of each additive in Table 1 is percentages by mass calculated based on the total mass of the electrolyte.

### (4) Preparation of separator

A 16 µm-thick porous polyethylene (PE) film is used as a separator.

### (5) Preparation of lithium-ion battery

The positive electrode plate, the separator, and the negative electrode plate are stacked in sequence and then winded to form a bare cell, so that the separator is located between the positive and negative electrode plates to isolate the positive and negative electrodes. A tab is soldered, and the bare cell is placed in an outer package of aluminum-plastic film. After drying, the electrolyte prepared above is injected, followed by the packaging, standing, formation, shaping, and capacity test procedures, to complete the preparation of a lithium-ion battery (where a soft-packaged lithium-ion battery has a thickness of 4.0 mm, a width of 60 mm, and a length of 140 mm).

**Table 1. Parameters of additives in electrolytes of Examples 1-11 and Comparative Examples 1-7**

| | The first additive | | The second additive | | Other additives | |
|---|---|---|---|---|---|---|
| | Type | Content | Type | Content | Type | Content |
| Example 1 | Propanesultone | 0.003% | Lithium bis(trifluoromethyl) (oxalato)borate | 0.5% | / | / |
| Example 2 | Propanesultone | 0.01% | Lithium bis(trifluoromethyl) (oxalato)borate | 0.5% | / | / |
| Example 3 | Propanesultone | 0.5% | Lithium bis(trifluoromethyl) (oxalato)borate | 0.5% | / | / |
| Example 4 | Propanesultone | 1% | Lithium bis(trifluoromethyl) (oxalato)borate | 0.5% | / | / |
| Example 5 | Propanesultone | 3% | Lithium bis(trifluoromethyl) (oxalato)borate | 0.5% | / | / |
| Example 6 | 1,4-Butanesultone | 1% | Lithium dicyano(oxalato)borate | 0.003% | / | / |
| Example 7 | 1,4-Butanesultone | 1% | Lithium dicyano(oxalato)borate | 0.01% | / | / |
| Example 8 | 1,4-Butanesultone | 1% | Lithium dicyano(oxalato)borate | 0.3% | / | / |
| Example 9 | 1,4-Butanesultone | 1% | Lithium dicyano(oxalato)borate | 0.5% | / | / |
| Example 10 | 1,4-Butanesultone | 1% | Lithium dicyano(oxalato)borate | 1% | / | / |
| Example 11 | Propanesultone | 1% | Lithium bis(trifluoromethyl) (oxalato)borate | 0.5% | LiBF₄ | 0.5% |
| Comparative Example 1 | / | / | / | / | / | / |
| Comparative Example 2 | Propanesultone | 1% | / | / | / | / |
| Comparative Example 3 | / | / | Lithium bis(trifluoromethyl) (oxalato)borate | 0.5% | / | / |
| Comparative Example 4 | 1,4-Butanesultone | 1% | Lithium difluoro(oxalato)borate | 0.5% | / | / |
| Comparative Example 5 | Propanesultone | 1% | / | / | LiBF₄ | 0.5% |
| Comparative Example 6 | Propanesultone | 5% | Lithium bis(trifluoromethyl)(oxalato)borate | 0.5% | / | / |
| Comparative Example 7 | 1,4-Butanesultone | 1% | Lithium dicyano(oxalato)borate | 3% | / | / |

Next, the test process of the lithium-ion battery is described.

### (1) Gas generation test of lithium-ion battery at high temperature

At room temperature, the lithium-ion battery is charged to 4.2 V with a constant current of 1C, and then charged with a constant voltage of 4.2V to a current of 0.05C. After being fully charged, the volume of the lithium-ion battery is tested by a drainage method and recorded. Then the lithium-ion battery is stored at 80°C, removed after 24 hours, and allowed to stand for 60 min at room temperature. The volume of the lithium-ion battery is tested by the drainage method and recorded within one hour after cooling to room temperature. Then a high temperature storage test is carried out following the above steps until the storage period is 10 days. The volume expansion rate of the lithium-ion battery as a function of storage time is calculated based on the volume of the lithium-ion battery tested before storage.

After the lithium-ion battery is stored for N days at 80°C, volume expansion rate (%) = (volume of lithium-ion battery measured after storage for N days/volume of lithium-ion battery measured before storage-1) x 100%.

### (2) Test of initial DCR and DCR during the cycle process of lithium-ion battery

The initial DCR and the DCR during the cycle process of the lithium-ion battery are determined. The specific test process is as follows: First, the lithium-ion battery is charged to 4.2V with a constant current of 1C, then charged to a current of 0.05C with a constant voltage of 4.2V, and then discharged with a constant current of 1C for 48 min (adjusted to 20% SOC), and allowed to stand for 60 min. Then the battery is discharged with a constant current of 4C for 30s, and the DCR test is performed with a sampling interval of 0.1s to obtain the initial DCR of the lithium-ion battery. Then, a charge-discharge cycle performed with 1C constant current and constant voltage and the DCR after 100 cycles of the lithium-ion battery is tested in the above manner.

**Table 2. Performance test results of Examples 1-11 and Comparative Example 1-7**

| | Volume expansion rate after storage at 80°C for 10 days | Initial DCR of lithium-ion battery (mohm) | DCR (mohm) after 100 cycles of lithium-ion battery |
|---|---|---|---|
| Example 1 | 45.42% | 38 | 89 |
| Example 2 | 40.67% | 39 | 72 |
| Example 3 | 20.30% | 42 | 65 |
| Example 4 | 15.30% | 50 | 60 |
| Example 5 | 10.10% | 71 | 79 |
| Example 6 | 15.73% | 80 | 92 |
| Example 7 | 15.95% | 75 | 86 |
| Example 8 | 15.62% | 68 | 83 |
| Example 9 | 16.84% | 47 | 61 |
| Example 10 | 26.19% | 41 | 58 |
| Example 11 | 14.89% | 36 | 50 |
| Comparative Example 1 | 50.62% | 32 | 110 |
| Comparative Example 2 | 14.25% | 82 | 103 |
| Comparative Example 3 | 54.83% | 40 | 95 |
| Comparative Example 4 | 20.60% | 48 | 70 |
| Comparative Example 5 | 14.74% | 46 | 61 |
| Comparative Example 6 | 13.95% | 104 | 116 |
| Comparative Example 7 | 51.31% | 39 | 54 |

As can be seen from the analysis of the test results in Table 2, the performances of the lithium-ion batteries prepared in Examples 1-11 are greatly improved compared with the lithium-ion batteries prepared in Comparative Examples 1-7. This indicates that the first additive and the second additive can be combined in a certain content range to form a relatively stable interface film at the positive and negative electrode interfaces of the lithium-ion battery, thereby effectively suppressing the generation of gas inside the lithium-ion battery. Moreover, the interface film has a lower impedance, which can effectively reduce the DCR growth of the lithium-ion battery during use, and thus effectively improve the power performance of the lithium-ion battery. Among them, in particular, the lithium-ion batteries prepared in the Examples 11 and 10 have better performances due to the use of the first additive and the second additive with a specific content range.

In Comparative Example 2, only propanesultone is added, although it can form a film at the positive and negative electrode interfaces, to effectively inhibit the oxidative decomposition of the electrolyte, reduce the gas generation inside the lithium-ion battery, and improve the high temperature storage performance of the lithium-ion battery. However, the film formed at the negative electrode interface has a high impedance, and the initial DCR of the lithium-ion battery is very high, which is difficult to meet the normal use requirements of the lithium-ion battery.

In Comparative Example 3, only lithium bis(trifluoromethyl)(oxalato)borate is added, which is involved in the film formation at the negative electrode interface and reduces the charge transfer resistance, thus reducing the initial DCR of the lithium-ion battery. However, the additive has poor oxidation resistance and undergoes oxidative decomposition at the positive electrode under high temperature conditions, which is detrimental to the high temperature storage performance of the lithium-ion battery.

In Comparative Example 4, a combination of 1,4-butanesultone and lithium difluoro(oxalato)borate is used. Because lithium difluoro(oxalato)borate preferentially forms a film at the negative electrode, the reduction of 1,4-butanesultone at the negative electrode is suppressed, thereby maintaining a low initial DCR. However, lithium difluoro(oxalato)borate is more susceptible to oxidation at the positive electrode than lithium lithium dicyano(oxalato)borate, so it is easier to increase the gas generation during the high temperature storage of lithium-ion battery, and the DCR growth during the cycle is also increased faster.

In Comparative Example 5, a combination of propanesultone and LiBF₄ is used, and no lithium bis(trifluoromethyl)(oxalato)borate is added. The initial DCR is larger than that of Example 11 with lithium bis(trifluoromethyl)(oxalato)borate in which lithium bis(trifluoromethyl)(oxalato)borate is added, indicating that the addition of the additive lithium bis(trifluoromethyl)(oxalato)borate to an electrolyte containing LiBF₄ can further improve the initial DCR.

In Comparative Example 6, the content of the first additive is too large, and the effect of further ameliorating the gas generation during storage is not obvious. And a large amount of residual propanesultone is reduced at the negative electrode to form a dense and thick SEI film, which hinders the transport of lithium ions and seriously deteriorates the DCR of the lithium-ion battery, thereby being disadvantageous for improving the power performance of the lithium-ion battery.

In Comparative Example 7, the content of the second additive is too large, and the residual lithium dicyano(oxalato)borate is easily oxidized and decomposed at the positive electrode, resulting in deterioration of the high temperature storage performance of the lithium-ion battery, and is also disadvantageous for improving the safety performance of the lithium-ion battery.

The above results show that the overall performance of the lithium-ion battery can be greatly improved only when the first additive and the second additive are used in combination, so that the lithium-ion battery has both good high temperature storage performance and power performance at the same time. And in an example, the content of the first additive is less than or equal to 3%, and the content of the second additive is less than or equal to 1%.

## Claims

1. An electrolyte, comprising:
an electrolyte salt;
an organic solvent; and
additives
wherein
the additives comprise a first additive and a second additive;
the first additive is one or more selected from compounds shown as Formula 1, wherein in Formula 1, n is an integer from 1 to 4, and R₁ is one selected from H, C1-C5 alkyl, C1-C5 fluoroalkyl, C2-C5 alkenyl, C2-C5 alkynyl, and phenyl; and 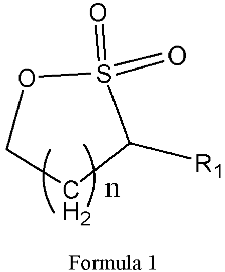
the second additive is one or more selected from compounds shown as Formula 2, wherein in Formula 2, R₂₁ and R₂₂ are each independently one selected from F, trifluoromethyl, pentafluoroethyl, and cyano, and R₂₁ and R₂₂ are not both F; 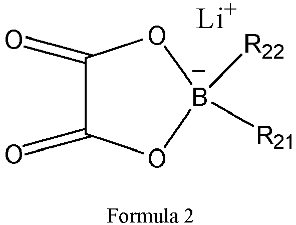
wherein the electrolyte salt is one or more selected from the group consisting of lithium hexafluorophosphate, lithium bis(fluorosulfonyl)imide, lithium bis(trifluoromethanesulphonyl)imide, lithium trifluoromethanesulphonate, lithium hexafluoroarsenate, lithium bis(oxalato)borate, and lithium perchlorate, and preferably lithium hexafluorophosphate.

2. The electrolyte according to claim 1, wherein R₁ is H or phenyl.

3. The electrolyte according to any one of preceding claims, wherein the C1-C5 alkyl is selected from group consisting of -CH₃, -CH₂CH₃, -CH₂CH₂CH₃, -CH(CH3)₂, -CH₂CH₂CH₂CH₃, -CH(CH₃)CH₂CH₃, -CH₂CH(CH₃)₂, -C(CH₃)₃, -CH₂CH₂CH₂CH₂CH₃, -CH(CH₃)CH₂CH₂CH₃, -CH₂CH(CH₃)CH₂CH₃, -CH₂CH₂CH(CH₃)₂, -CH(C₂H₅)CH₂CH₃, -C(CH₃)₂CH₂CH₃, -CH(CH₃)CH(CH₃)₂, -CH₂C(CH₃)₃.

4. The electrolyte according to any one of preceding claims, wherein R₁ is selected from C1-C5 alkyl having one fluorine atom, two fluorine atoms or three fluorine atoms.

5. The electrolyte according to any one of preceding claims, wherein R₁ is selected from group consisting of -CH=CH₂, -CH=CHCH₃, CH₂=CHCH₂-, -CH₂CH=CHCH₃, -CH=CHCH₂CH₂CH₃, CH₂=CHCH₂CH₂CH₂-, -CH₂CH=CHCH₂CH₃, CH₃CH=CHCH₂CH₂-; and, wherein preferably, R₁ is CH₂=CHCH₂-.

6. The electrolyte according to any one of preceding claims, wherein R₁ is selected from group consisting of -C=CH, -C=CCH₃, CH=CCH₂-, -CH₂C=CCH₃, -C=CCH₂CH₂CH₃, CH=CCH₂CH₂CH₂-, -CH₂C=CCH₂CH₃, CH₃C=CCH₂CH₂-; and, wherein preferably, R₁ is -C=CH or -C=CCH₃.

7. The electrolyte according to any one of preceding claims, wherein n is 1, 2, 3 or 4.

8. The electrolyte according to any one of preceding claims, wherein the first additive is one or more selected from the following compounds: 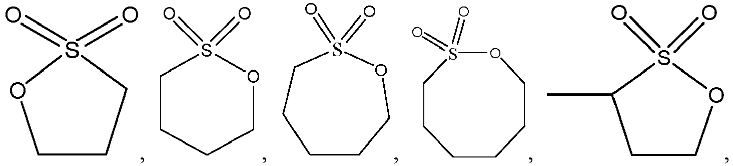 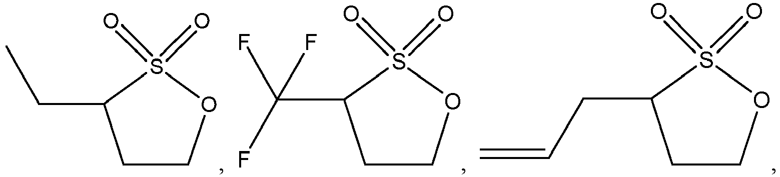 and

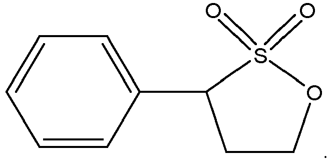

9. The electrolyte according to any one of preceding claims, wherein the second additive is one or more selected from the following compounds:

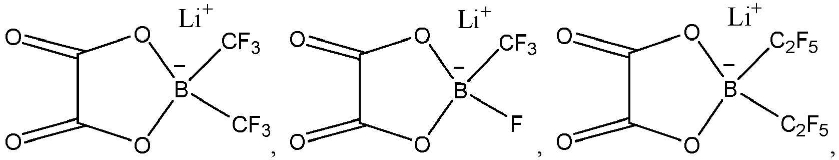

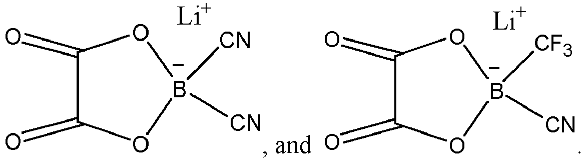

10. The electrolyte according to any one of preceding claims, wherein the first additive has a content of 3% or less of total mass of the electrolyte; and preferably, the first additive has a content of 0.01% to 3% of total mass of the electrolyte.

11. The electrolyte according to any one of preceding claims, wherein the second additive has a content of 1% or less of total mass of the electrolyte; and preferably, the second additive has a content of 0.01% to 1% of total mass of the electrolyte.

12. The electrolyte according to any one of preceding claims, wherein the electrolyte salt has a concentration of 0.5 mol/L to 2 mol/L, and preferably, the electrolyte salt has a concentration of 0.8 mol/L to 1.2 mol/L.

13. The electrolyte according to any one of preceding claims, wherein the additives further comprise LiBF₄, wherein LiBF₄ has a content of 1% or less of total mass of the electrolyte, and preferably LiBF₄ has a content of 0.01% to 1% of total mass of the electrolyte.

14. The electrolyte according to any one of preceding claims, further comprising one or both of vinyl ethylene carbonate and ethylene sulfate.

15. A lithium-ion battery, comprising the electrolyte according to any one of preceding claims 1 to 14.

## Patentansprüche

1. Elektrolyt, umfassend:
ein Elektrolytsalz;
ein organisches Lösungsmittel und
Additive,
wobei
die Additive ein erstes Additiv und ein zweites Additiv umfassen;
es sich bei dem ersten Additiv um eines oder mehrere handelt, die aus Verbindungen, die als Formel 1 gezeigt sind, ausgewählt sind, wobei in Formel 1 n für eine ganze Zahl von 1 bis 4 steht und R₁ für eine Gruppe steht, die aus H, C1-CS-Alkyl, C1-CS-Fluoralkyl, C2-C5-Alkenyl, C2-C5-Alkinyl und Phenyl ausgewählt ist; und 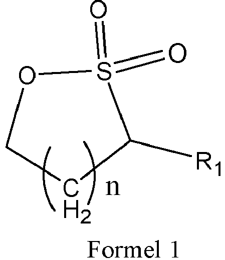
es sich bei dem zweiten Additiv um eines oder mehrere handelt, die aus Verbindungen, die als Formel 2 gezeigt sind, ausgewählt sind, wobei in Formel 2 R₂₁ und R₂₂ jeweils unabhängig für eine aus F, Trifluormethyl, Pentafluorethyl und Cyano ausgewählte Gruppe stehen und R₂₁ und R₂₂ nicht beide für F stehen; 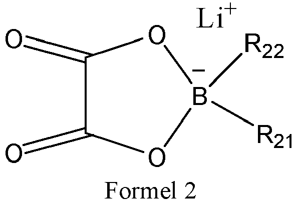
wobei es sich bei dem Elektrolytsalz um eines oder mehrere aus der Gruppe bestehend aus Lithiumhexafluorophosphat, Lithiumbis(fluorsulfonyl)imid, Lithiumbis(trifluormethansulfonyl)imid, Lithiumtrifluormethansulfonat, Lithiumhexafluoroarsenat, Lithiumbis(oxalato)borat und Lithiumperchlorat und vorzugsweise Lithiumhexafluorophosphat handelt.

2. Elektrolyt nach Anspruch 1, wobei R₁ für H oder Phenyl steht.

3. Elektrolyt nach einem der vorhergehenden Ansprüche, wobei das C1-CS-Alkyl aus der Gruppe bestehend aus -CH₃, -CH₂CH₃, -CH₂CH₂CH₃, -CH(CH3)₂, -CH₂CH₂CH₂CH₃, - CH(CH₃)CH₂CH₃, -CH₂CH(CH₃)₂, -C(CH₃)₃, -CH₂CH₂CH₂CH₂CH₃, - CH(CH₃)CH₂CH₂CH₃, -CH₂CH(CH₃)CH₂CH₃, -CH₂CH₂CH(CH₃)₂, -CH(C₂H₅)CH₂CH₃, -C(CH₃)₂CH₂CH₃, -CH(CH₃)CH(CH₃)₂, -CH₂C(CH₃)₃ ausgewählt ist.

4. Elektrolyt nach einem der vorhergehenden Ansprüche, wobei R₁ aus C1-CS-Alkyl mit einem Fluoratom, zwei Fluoratomen oder drei Fluoratomen ausgewählt ist.

5. Elektrolyt nach einem der vorhergehenden Ansprüche, wobei R₁ aus der Gruppe bestehend aus -CH=CH₂, -CH=CHCH₃, CH₂=CHCH₂-, -CH₂CH=CHCH₃, -CH=CHCH₂CH₂CH₃, CH₂=CHCH₂CH₂CH₂-, -CH₂CH=CHCH₂CH₃, CH₃CH=CHCH₂CH₂- ausgewählt ist; und wobei vorzugsweise R₁ für CH₂=CHCH₂- steht.

6. Elektrolyt nach einem der vorhergehenden Ansprüche, wobei R₁ aus der Gruppe bestehend aus -C=CH, -C=CCH₃, CH=CCH₂-, -CH₂C=CCH₃, -C=CCH₂CH₂CH₃, CH=CCH₂CH₂CH₂-, -CH₂C=CCH₂CH₃, CH₃C=CCH₂CH₂- ausgewählt ist; und wobei vorzugsweise R₁ für -C=CH oder -C=CCH₃steht.

7. Elektrolyt nach einem der vorhergehenden Ansprüche, wobei n für 1, 2, 3 oder 4 steht.

8. Elektrolyt nach einem der vorhergehenden Ansprüche, wobei es sich bei dem ersten Additiv um eines oder mehrere handelt, die aus den folgenden Verbindungen ausgewählt sind:

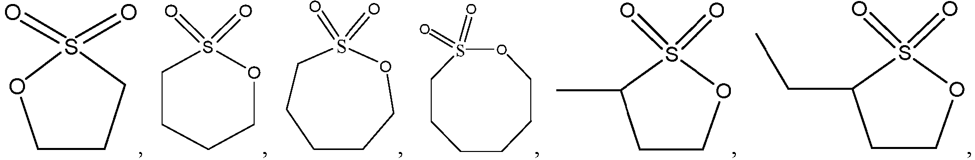

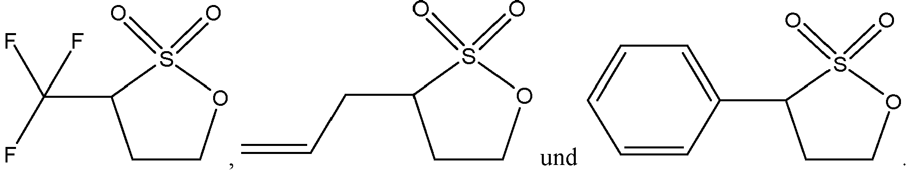

9. Elektrolyt nach einem der vorhergehenden Ansprüche, wobei es sich bei dem zweiten Additiv um eines oder mehrere handelt, die aus den folgenden Verbindungen ausgewählt sind:

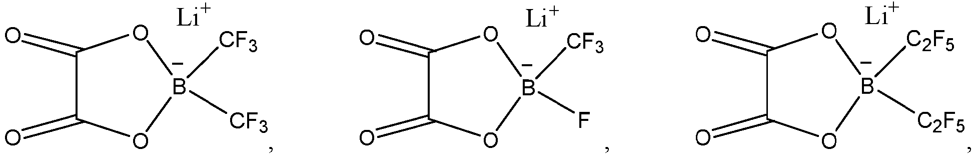

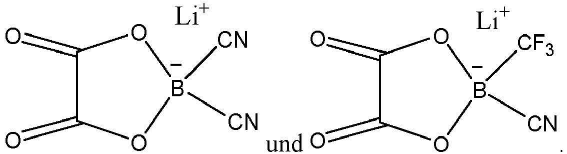

10. Elektrolyt nach einem der vorhergehenden Ansprüche, wobei das erste Additiv einen Gehalt von 3 % oder weniger der Gesamtmasse des Elektrolyts aufweist und das erste Additiv vorzugsweise einen Gehalt von 0,01 % bis 3 % der Gesamtmasse des Elektrolyts aufweist.

11. Elektrolyt nach einem der vorhergehenden Ansprüche, wobei das zweite Additiv einen Gehalt von 1 % oder weniger der Gesamtmasse des Elektrolyts aufweist und das zweite Additiv vorzugsweise einen Gehalt von 0,01 % bis 1 % der Gesamtmasse des Elektrolyts aufweist.

12. Elektrolyt nach einem der vorhergehenden Ansprüche, wobei das Elektrolytsalz eine Konzentration von 0,5 mol/l bis 2 mol/l aufweist und das Elektrolytsalz vorzugsweise eine Konzentration von 0,8 mol/l bis 1,2 mol/l aufweist.

13. Elektrolyt nach einem der vorhergehenden Ansprüche, wobei die Additive ferner LiBF₄ umfassen, wobei LiBF₄ einen Gehalt von 1 % oder weniger der Gesamtmasse des Elektrolyts aufweist und LiBF₄ vorzugsweise einen Gehalt von 0,01 % bis 1 % der Gesamtmasse des Elektrolyts aufweist.

14. Elektrolyt nach einem der vorhergehenden Ansprüche, ferner umfassend eines oder beide von Vinylethylencarbonat und Ethylensulfat.

15. Lithiumionenbatterie, umfassend den Elektrolyt nach einem der vorhergehenden Ansprüche 1 bis 14.

## Revendications

1. Électrolyte, comprenant :
un sel électrolyte ;
un solvant organique ; et
des additifs,
les additifs comprenant un premier additif et un deuxième additif ;
le premier additif étant un ou plusieurs choisis parmi des composés présentés comme la formule 1, dans la formule 1, n étant un entier de 1 à 4, et R₁ étant l'un choisi parmi H, C1-C5 alkyle, C1-C5 fluoroalkyle, C2-C5 alcényle, C2-C5 alcynyle, et phényle ; et 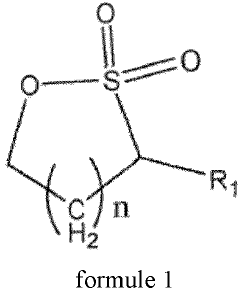
le deuxième additif étant un ou plusieurs choisis parmi des composés présentés comme la formule 2, dans la formule 2, R₂₁ et R₂₂ étant chacun indépendamment l'un choisi parmi F, trifluorométhyle, pentafluoroéthyle, et cyano, et R₂₁ et R₂₂ n'étant pas tous deux F ; 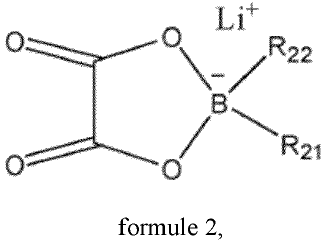
le sel électrolyte étant un ou plusieurs choisis dans le groupe constitué par l'hexafluorophosphate de lithium, le bis(fluorosulfonyl)imide de lithium, le bis(trifluorométhanesulfonyl)imide de lithium, le trifluorométhanesulfonate de lithium, l'hexafluoroarsénate de lithium, le bis(oxalato)borate de lithium et le perchlorate de lithium, et préférablement l'hexafluorophosphate de lithium.

2. Électrolyte selon la revendication 1, R₁ étant H ou phényl.

3. Électrolyte selon l'une quelconque des revendications précédentes, le C1-C5 alkyle étant choisi dans le groupe constitué par -CH₃, -CH₂CH₃, -CH₂CH₂CH₃, -CH(CH3)₂, - CH₂CH₂CH₂CH₃, -CH(CH₃)CH₂CH₃, -CH₂CH(CH₃)₂, -C(CH₃)₃, -CH₂CH₂CH₂CH₂CH₃, - CH(CH₃)CH₂CH₂CH₃, -CH₂CH(CH₃)CH₂CH₃, -CH₂CH₂CH(CH₃)₂, -CH(C₂H₅)CH₂CH₃, -C(CH₃)₂CH₂CH₃, -CH(CH₃)CH(CH₃)₂, -CH₂C(CH₃)₃.

4. Électrolyte selon l'une quelconque des revendications précédentes, R₁ étant choisi parmi C1-C5 alkyle ayant un atome de fluor, deux atomes de fluor ou trois atomes de fluor.

5. Électrolyte selon l'une quelconque des revendications précédentes, R₁ étant choisi dans le groupe constitué par -CH=CH₂, -CH=CHCH₃, CH₂=CHCH₂-, -CH₂CH=CHCH₃, - CH=CHCH₂CH₂CH₃, CH₂=CHCH₂CH₂CH₂-, -CH₂CH=CHCH₂CH₃, CH₃CH=CHCH₂CH₂-, et préférablement R₁ est CH₂=CHCH₂-,

6. Électrolyte selon l'une quelconque des revendications précédentes, R₁ étant choisi dans le groupe constitué par -C=CH, -C=CCH₃, CH=CCH₂-, -CH₂C=CCH₃, -C=CCH₂CH₂CH₃, CH=CCH₂CH₂CH₂-, -CH₂C=CCH₂CH₃, CH₃C=CCH₂CH₂-, et préférablement R₁ est - C=CH ou -C=CCH₃.

7. Électrolyte selon l'une quelconque des revendications précédentes, n étant 1, 2, 3 ou 4.

8. Électrolyte selon l'une quelconque des revendications précédentes, le premier additif étant un ou plusieurs choisis parmi les composés suivants : 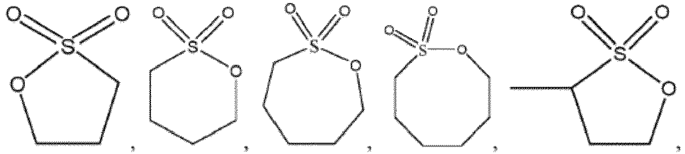 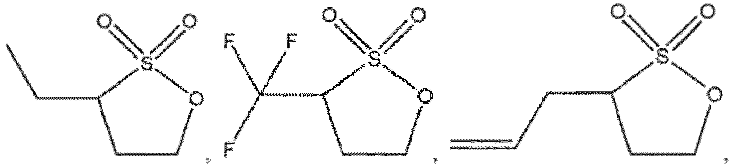 et

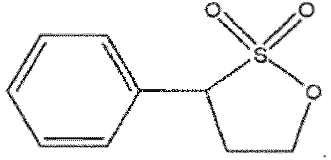

9. Électrolyte selon l'une quelconque des revendications précédentes, le deuxième additif étant un ou plusieurs choisis parmi les composés suivants :

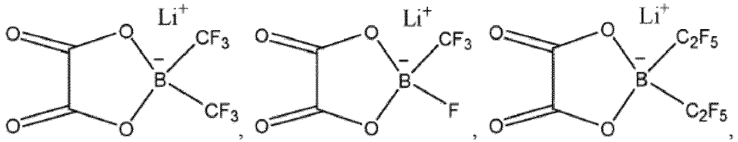

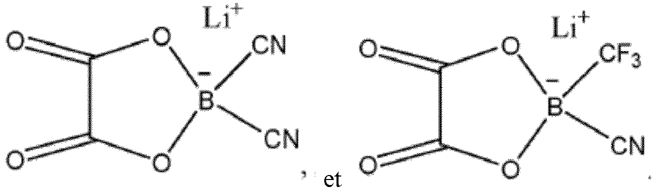

10. Électrolyte selon l'une quelconque des revendications précédentes, le premier additif ayant une teneur de 3 % ou moins d'une masse totale de l'électrolyte ; et préférablement, le premier additif ayant une teneur de 0,01 % à 3 % d'une masse totale de l'électrolyte.

11. Électrolyte selon l'une quelconque des revendications précédentes, le deuxième additif ayant une teneur de 1 % ou moins d'une masse totale de l'électrolyte ; et préférablement, le deuxième additif ayant une teneur de 0,01 % à 1 % d'une masse totale de l'électrolyte.

12. Électrolyte selon l'une quelconque des revendications précédentes, le sel électrolyte ayant une concentration de 0,5 mole/L à 2 mole/L, et préférablement, le sel électrolyte ayant une concentration de 0,8 mole/L à 1,2 mole/L.

13. Électrolyte selon l'une quelconque des revendications précédentes, les additifs comprenant en outre LiBF₄, LiBF₄ ayant une teneur de 1 % ou moins d'une masse totale de l'électrolyte, et préférablement LiBF₄ ayant une teneur de 0,01 % à 1 % d'une masse totale de l'électrolyte.

14. Électrolyte selon l'une quelconque des revendications précédentes, comprenant en outre l'un ou les deux parmi le carbonate de vinyle et d'éthylène et le sulfate d'éthylène.

15. Batterie lithium-ion, comprenant l'électrolyte selon l'une quelconque des revendications 1 à 14.
